# FASCICULE DE BREVET EUROPEEN

(11) **EP 0 507 697 B1**
(45) Date de publication et mention de la délivrance du brevet: **26.06.1996**
(21) Numéro de dépôt: 92400945.9
(22) Date de dépôt: 03.04.1992
(51) Int. Cl.: H02P 7/628, H02M 7/5387

(54) **Commande de moteur électrique à stator bobiné notamment pour appareil électroménager**
Regelung eines elektrischen Motors mit Statorwicklung, besonders für Haushaltsgerät
Control of electric motor with stator winding, especially for domestic appliance

(30) Priorité: 04.04.1991 FR 9104082
(43) Date de publication de la demande: 07.10.1992
(73) Titulaire: SOCIETE ELECTROMECANIQUE DU NIVERNAIS - SELNI, F-58000 Nevers (FR)
(72) Inventeur: Bergmann, Claude, F-92045 Paris la Défense (FR); Herrada, José, F-92045 Paris la Défense (FR); Huron, Claude, F-92045 Paris la Défense (FR)
(74) Mandataire: Benoit, Monique

(56) Documents cités:
- GB-A- 2 083 959
- ELEKTOR ELECTRONICS vol. 13, no. 151, Décembre 1987, pp. 64-67, London, GB; K. WETZEL et al.: "3-Phase Power Converter for Induction Motors"
- ELEKTROTECHNIK, vol. 68, no. 17, Octobre 1986, pp. 58,59, Würzburg, DE; "Drehstrom Pulsmodulator in IC-Form aus dem Einphasennetz"

## Description

L'invention est relative à un dispositif de commande de moteur électrique asynchrone ou synchrone ainsi qu'à un appareil électroménager, tel qu'un lave-linge, comportant un tel moteur et son dispositif de commande.

On sait qu'un moteur électrique asynchrone comporte un stator bobiné alimenté en courant alternatif qui crée un champ tournant induisant dans un rotor, bobiné ou non, des courants. C'est l'action du champ magnétique tournant sur les courants induits dans le rotor qui assure la rotation. La vitesse de rotation du rotor est cependant naturellement inférieure à la vitesse de rotation du champ tournant car l'égalité entre les vitesses ne permettrait pas d'induction de courant dans le rotor. La différence entre la vitesse de rotation du champ tournant et la vitesse de rotation du rotor est appelée le glissement.

La vitesse de rotation du champ tournant, et donc la vitesse de rotation du moteur, dépend de la fréquence d'alimentation du stator. En général le stator est alimenté par le réseau de distribution à fréquence 50 hertz. L'alimentation est monophasée ou polyphasée, le plus souvent triphasée.

Si on veut faire varier la vitesse de rotation du moteur il faut faire varier la fréquence d'alimentation du stator. En outre, si, comme c'est le cas général, on veut employer le moteur dans ses conditions optimales, il faut en plus pouvoir faire varier l'amplitude de la tension d'alimentation. En effet on sait que le couple moteur est proportionnel au rapport entre la tension d'alimentation du stator et la fréquence de cette tension; ainsi si l'on veut maintenir le couple maximale constant il faut maintenir constant le rapport entre la tension et la fréquence.

La difficulté et le coût de réalisation d'une telle commande à fréquence et amplitude variables n'ont jusqu'à présent pas permis un développement important de cette technique.

Pourtant elle offre une solution particulièrement intéressante pour faire varier la vitesse d'un moteur asynchrone.

De tels moteurs peuvent être utilisés notamment pour entraîner le tambour de lave-linge dont la vitesse doit varier sur une large gamme, entre quelques dizaines de tours par minute et plus de mille tours par minute.

Un article paru dans la revue Elector Electronics, volume 13, n°151, décembre 1987, pages 64-67 et une demande de brevet GB-2 083 959 traitent de commandes à fréquence et amplitude variables pour moteurs électriques.

Les difficultés de réalisation de commandes à vitesse variable de moteurs asynchrones sont liées au fait que l'alimentation des bobinages du stator doit être d'une forme sinusoïdale quasi parfaite si on veut éviter les variations indésirées, notamment les variations brutales ou par à-coups du couple moteur. Et cette condition doit être respectée aussi bien à vitesse constante qu'à vitesse variable. En outre, l'évolution de la fréquence d'excitation doit être douce, au risque de décrocher le moteur.

L'invention permet de résoudre ce problème de façon particulièrement économique.

Selon une caractéristique, la tension d'alimentation du moteur est composée d'une suite de tensions continues, ou échantillons, dont la valeur moyenne constitue une sinusoïde, le nombre d'échantillons par alternance de la sinusoïde étant d'autant plus faible que la fréquence est élevée. Par exemple en monophasé aux plus basses fréquences de sinusoïde on prévoit douze échantillons par alternance et aux plus hautes fréquences, de quelques centaines de Hertz, on peut se contenter de deux échantillons par alternance.

En d'autres termes on dégrade aux hautes fréquences la forme de la sinusoïde, ce qui semble contradictoire avec les exigences de qualité sur la forme de la sinusoïde de commande d'un moteur notamment de type asynchrone. Toutefois on a constaté qu'en général, pour la plupart des applications, la charge entraînée par le moteur compensait les à-coups provoqués à haute vitesse par une sinusoïde de mauvaise qualité.

Cette caractéristique permet de faciliter la réalisation du dispositif de commande du moteur, notamment de limiter la capacité de mémoire nécessaire.

Egalement pour faciliter la réalisation du dispositif de commande on prévoit aux hautes fréquences d'alimentation un couple sensiblement inférieur au couple aux basses fréquences. On a en effet constaté que pour la plupart des applications le couple doit être plus important en basse vitesse qu'aux vitesses plus élevées. Ainsi la dynamique de variation de la tension d'alimentation est limitée, ce qui facilite encore la réalisation du dispositif de commande.

Quel que soit le mode de réalisation on a intérêt à utiliser, pour le dispositif de commande, un microprocesseur à technologie numérique donc discrète. Pour limiter la taille, donc le prix, de ce microprocesseur il faut minimiser le nombre de valeurs discrètes en mémoire sans compromettre la qualité de la commande. On prévoit en particulier que la précision sur la tension de commande est nettement plus élevée aux basses fréquences qu'aux hautes fréquences.

Un dispositif de commande selon l'invention est décrit par la revendication 1.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma d'un dispositif de commande et d'un moteur selon l'invention,
- les figures 2, 3 et 3a sont des diagrammes expliquant le fonctionnement de l'appareil de la figure 1, et
- la figure 4 est un schéma d'une partie du dispositif de la figure 1.

L'exemple qu'on va décrire avec les figures se rapporte à un lave-linge à tambour entraîné par un moteur asynchrone triphasé. Ce moteur asynchrone est par exemple du type à rotor à cage, c'est-à-dire non bobiné. On sait qu'un tel moteur est bon marché.

La vitesse de rotation du tambour d'un lave-linge doit pouvoir varier entre quelques dizaines de tours par minute (pour le lavage) jusqu'à plus de 1 millier de tours par minute pour l'essorage.

L'invention se rapporte principalement à la commande de l'alimentation, et donc de la vitesse de rotation, du moteur.

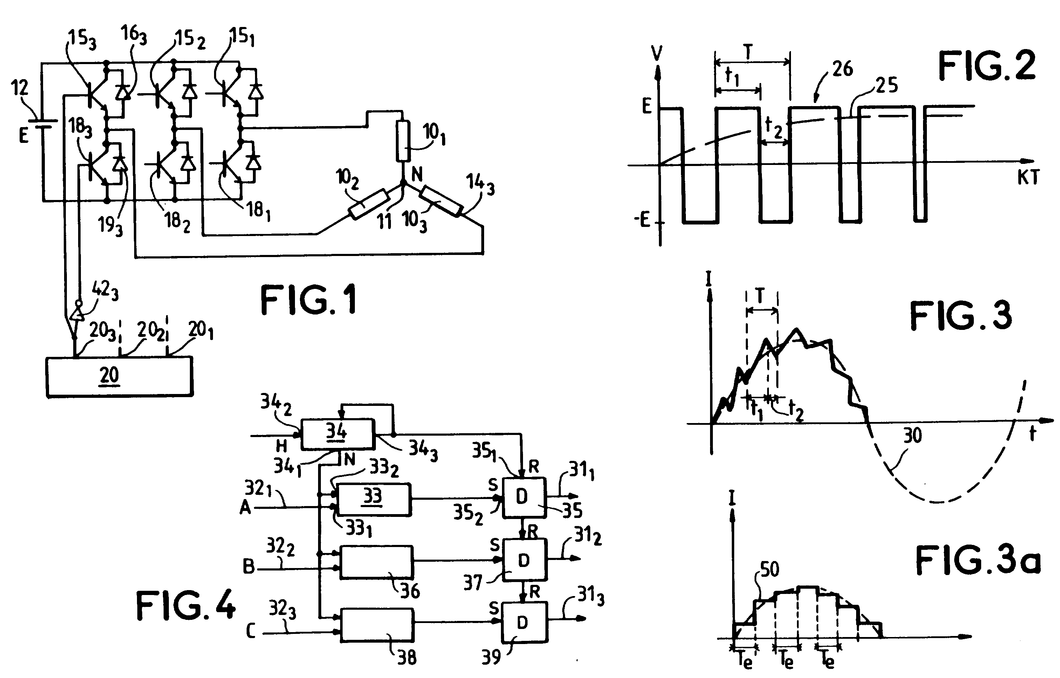

Sur la figure 1 le moteur est représenté par ses bobinages statoriques 10₁, 10₂, 10₃ montés en étoile, c'est-à-dire convergeant au point 11 constituant le neutre N du réseau. Chacune des phases 10 du stator équivaut à l'ensemble d'une inductance et d'une résistance en série.

Pour faire varier la vitesse de rotation du moteur on doit faire varier la fréquence d'alimentation des bobinages statoriques du moteur et pour maintenir le moteur dans ses conditons optimales de fonctionnement, il faut faire varier la tension d'alimentation.

A cet effet on part d'une tension continue E qu'on découpe à fréquence déterminée variable de façon à engendrer des signaux rectangulaires. Sur une période de découpage c'est le rapport cyclique du signal rectangulaire qui détermine l'intensité du courant traversant le stator. On fait varier ce rapport cyclique de façon que la variation du courant dans le moteur se rapproche au mieux de la forme sinusoïdale.

La tension continue est fabriquée par un redresseur 12 à partir de la tension du secteur d'alimentation, en général à fréquence 50 Hertz.

Le pôle positif de la source 12 est relié à une borne 14₃ du stator de l'enroulement 10₃ par l'intermédiaire d'un interrupteur 15₃ par exemple un transistor. Ce pôle positif de la source 12 est également relié à la cathode d'une diode 16₃ dont l'anode est reliée à la borne 14₃.

Le pôle négatif de la source 12 est connecté à la borne 14₃ par l'intermédiaire d'un second interrupteur commandé 18₃ tel qu'un transistor. Une seconde diode 19₃ est en parallèle sur l'interrupteur 18₃ avec sa cathode reliée directement à la borne 14₃.

Aux enroulements 10₁ et 10₂ sont associés des montages identiques à interrupteurs 15, 18 et diodes 16, 19.

La commande des interrupteurs 15₃ et 18₃ est réalisée grâce à un circuit 20 de manière qu'un seul des interrupteurs soit conducteur à la fois. A cet effet la sortie 20₃ du circuit 20 est connectée directement à l'électrode de commande de l'interrupteur 15₃ et est connectée par l'intermédiaire d'un inverseur 42₃ à l'électrode de commande de l'interrupteur 18₃.

Ainsi sur la borne 14₃ on applique alternativement le potentiel E et le potentiel -E comme représenté sur la figure 2.

Les sorties 20₁ et 20₂ commandent de la même manière les interrupteurs, respectivement 15₁, 18₁ et 15₂, 18₂.

Aux bornes de chaque enroulement il apparaît donc des signaux de tension rectangulaires. Sur une période de découpage T l'interrupteur 15 est conducteur pendant une période t₁ et l'interrupteur 18 est conducteur pendant une période t₂. La valeur moyenne de l'intensité I du courant traversant l'enroulement statorique 10 est fonction, pendant la période T, du rapport cyclique t₁/T. Le circuit 20 grâce à une mémoire et un microprocesseur engendre des rapports cycliques tels que l'intensité du courant dans les bobinages du stator soit quasiment sinusoïdale.

Sur la figure 2, la courbe 25 en trait interrompu représente une alternance de sinusoïde décrite, par valeurs discrètes, par les rapports cycliques des créneaux 26.

Le diagramme de la figure 3 montre la variation du courant I dans l'enroulement 10 pour une demi-alternance. On voit que sur une période T l'intensité I croît pendant le temps t₁ puis décroît pendant le temps t₂. Mais la valeur moyenne du courant est une sinusoïde 30.

La figure 4 montre, de façon schématique, un générateur 31, faisant partie du circuit 20 de commande des interrupteurs 15 et 18, qui permet d'engendrer des rapports cycliques en fonction d'amplitudes instantanées A, B et C de sinusoïdes 30 d'un signal triphasé.

On rappelle que chacun des trois enroulements d'un moteur triphasé doit être alimenté par un signal sinusoïdal et les déphasages entre signaux d'alimentation de ces enroulements sont constants et égaux à 2 π/3.

Le circuit 31 de la figure 4 présente trois sorties 31₁, 31₂, 31₃ dont chacune correspond à la sortie, respectivement, 20₁, 20₂, 20₃ du circuit 20 (figure 1).

Le circuit 31 comporte aussi trois entrées 32₁, 32₂, 32₃. Sur l'entrée 32₁ on applique un signal numérique A correspondant à l'amplitude instantanée de la première sinusoïde. De même sur les entrées 32₂ et 32₃ on applique des signaux numériques B et C correspondant à l'amplitude instantanée, au même instant, des seconde et troisième sinusoïdes déphasées respectivement de 2 π/3 et 4 π/3 par rapport à la première.

Ces signaux numériques A, B et C sont fournis par un microprocesseur et une mémoire morte.

L'entrée 32₁ est connectée à la première entrée 33₁ d'un comparateur 33 dont la seconde entrée 33₂ est connectée à la sortie 34₁ d'un compteur 34. Sur l'entrée d'horloge H ou de comptage 34₂ du compteur 34 on applique un signal d'horloge de fréquence déterminée égale par exemple à 1 MHz.

Le compteur 34 est monté en diviseur de manière à émettre un signal de période T (figures 2 et 3) sur sa sortie 34₁. Le facteur de division est ici égal à 100. De cette manière la fréquence du signal sur la sortie 34₁ est de 10 KHz, c'est-à-dire que la période T est égale à 0,1 milliseconde.

Ce compteur 34 comporte une sortie 34₃ de reset qui est connectée à une entrée 35₁ de remise à zéro RAZ d'une bascule 35 de type D dont l'entrée S 35₂ reçoit le signal de sortie du comparateur 33.

De même aux entrées 32₂ et 32₃ sont associés des comparateurs et des bascules D respectivement 36, 37 et 38, 39.

La sortie 34₁ du compteur 34 est un nombre compris entre 0 et 100. Ce nombre augmente d'une unité à chaque période du signal d'horloge 34₂. Le comparateur 33 compare ce nombre appliqué sur l'entrée 33₂ au nombre A appliqué sur l'entrée 33₁. La sortie du comparateur 33 passe de 0 à 1 quand le nombre n en sortie du compteur 34 atteint et dépasse la valeur A. Ce signal 1 fait basculer la sortie de la bascule 35 de 0 à 1. Ainsi le signal sur la sortie 31₁ est à 1 pendant un temps (un nombre de signaux d'horloge H) proportionnel au nombre A appliqué sur l'entrée 32₁.

On a donc bien transformé le nombre A en un rapport cyclique permettant de commander les interrupteurs 15 et 18 (figure 1).

Comme le montre la figure 3 au cours de chaque période T le courant I traversant les enroulements du moteur présente localement une forme qui s'écarte de la sinusoïde. Cet écart par rapport à la sinusoïde sera d'autant plus élevé que la période T sera grande. On a donc intérêt à diminuer cette période T c'est-à-dire à augmenter la fréquence générale d'échantillonnage. Dans l'exemple cette fréquence d'échantillonnage est de 10 000 Hz, c'est-à-dire environ quinze fois plus élevée que la plus haute fréquence (600 Hz) de la sinusoïde

Par ailleurs il serait à priori préférable que la valeur A (et les valeurs B et C) soit modifiée ou ajustée à chaque période T de façon à correspondre au mieux à la valeur désirée correspondant à une sinusoïde parfaite. Mais cette contrainte imposerait une mémoire de très grande capacité, ce qui est difficilement compatible avec un prix modéré pour le circuit 20.

C'est pourquoi on prévoit des paliers 50 (figure 3a) dont chacun a une durée Tₑ - appelée la période d'échantillonnage - qui est un multiple entier de la période T de découpage. Au cours de chaque période Tₑ la valeur A est maintenue constante.

Egalement pour réduire la taille de la mémoire on a intérêt à diminuer le nombre de paliers 50 au cours de chaque période de la sinusoïde. Mais plus le nombre de paliers diminue, plus la qualité du signal sinusoïdal diminue, ce qui est aussi, à première vue, difficilement compatible avec une commande sans à-coups d'un moteur asynchrone.

Les études menées dans le cadre de l'invention ont montré qu'on pouvait diminuer le nombre de paliers quand la fréquence de la sinusoïde augmente et cela sans compromettre le fonctionnement correct du moteur et de l'équipement qu'il entraîne.

Dans un exemple de commande de moteur asynchrone triphasé le nombre de paliers correspond au tableau ci-dessous.

| Plages de fréquences désirées de sinusoïde | Nombre de paliers |
|---|---|
| 0 Hz - 30 Hz | 36 |
| 30 Hz - 70 Hz | 30 |
| 70 Hz - 150 Hz | 24 |
| 150 Hz - 200 Hz | 18 |
| 200 Hz - 300 Hz | 12 |
| 300 Hz - 600 Hz | 6 |

Pour la commande d'un moteur monophasé le nombre de paliers par période de sinusoïde est divisé par 3.

Du fait de la nature discrète (variation par paliers) du courant traversant les enroulements du moteur on comprend que si on ne prend pas de précautions particulières quand on fait varier la fréquence de la sinusoïde - c'est-à-dire quand on fait varier la vitesse de rotation du moteur - il peut se produire des phénomènes perturbateurs particulièrement nuisibles. En particulier si la variation de fréquence de la sinusoïde s'effectue au cours d'une alternance, il se produit une déformation instantanée qui induit une variation instantanée de fréquence pouvant occasionner un accroissement de glissement entraînant le décrochage du moteur asynchrone. Par exemple si partant d'une fréquence de sinusoïde de 300 Hz la déformation entraînée par la modification instantanée occasionne une variation relative de fréquence de 3 % il en résulte un accroissement de glissement de 9 Hz. Cet accroissement provoque le décrochage, c'est-à-dire l'arrêt du moteur.

De plus une modification de la forme de la sinusoïde peut aussi provoquer une composante continue. Par exemple si la composante continue est de l'ordre de 4 % pour une tension d'alimentation de 300 volts, la composante continue est alors de 10 ampères si la résistance interne du stator est de 1, 2 ohm.

Pour éviter les variations brusques de fréquence et la composante continue, la variation de fréquence de la sinusoïde est effectuée de la manière décrite ci-dessous.

On prévoit le programme en mémoire du microprocesseur de façon que, lors d'une variation de fréquence de la sinusoïde, la modification intervienne au début de l'alternance, lors d'un passage par zéro, à la fin d'un palier et en même temps qu'une commutation d'un interrupteur 15 ou 18. En outre on modifie la fréquence de hachage (de période T, figures 2 et 3) et/ou le nombre de périodes T par paliers et/ou le nombre de paliers afin que l'alternance de la sinusoïde modifiée contienne un nombre entier pair de paliers et multiple du nombre de phase, chaque palier correspondant (comme on l'a déjà vu) à un nombre entier de périodes T de hachage.

Un exemple concret permet de mieux comprendre cet aspect de l'invention. On part d'un signal sinusoïdal de période 2 400 microsecondes (416,6 Hz). Cette sinusoïde est engendrée à partir de six paliers de durée 400 microsecondes chacun. Chaque palier correspond à quatre périodes T de hachage de 100 microsecondes.

On voit que si l'on passe à la fréquence de 400 Hz correspondant à une période de 2 500 microsecondes on ne pourra pas prévoir de nombre entier pair de périodes de 100 microsecondes.

On modifie donc la période de hachage T et/ou le nombre de périodes T par paliers et/ou le nombre de paliers de façon que la sinusoïde comporte un nombre entier pair de périodes T′ de de hachage, T′ étant égal, de préférence à 100µs environ.

Si on veut garder le même nombre de paliers que pour la fréquence de 416,6 Hz on choisira alors un nombre de périodes T par paliers proche de 2500: (100 x 6) = 4,16. Le nombre de périodes T par palier doit être entier, on choisit donc 4 ou 5. On admet 4, ce qui correspond à une période de : T′ = 2500/(6 x 4)µs = 104,16µs.

La fréquence de hachage est donc diminuée de 4% dans ce cas.

La modification la plus importante intervient pour une fréquence de sinusoïde de 300 Hz définie sur douze paliers. Dans ce cas avec une fréquence de hachage de 10 KHz il faudrait 2,77 périodes de hachage (chacune de durée 100 microsecondes) par palier. On doit alors augmenter (ou diminuer) la période de hachage pour que chaque palier soit défini sur un nombre entier de telles périodes; dans ce cas on choisit le nombre entier immédiatement inférieur, c'est-à- dire 2.

Dans cet exemple la fréquence de hachage est de 6,6 KHz.

Si on diminue la période de hachage on choisit le nombre entier de paliers immédiatement supérieur.

On a déjà vu en relation avec la description de la figure 4 que les amplitudes A, B, C des paliers de la sinusoïde sont comparées à des nombres de signaux d'horloge pour commander les interrupteurs 15 et 18.

La précision sur les amplitudes A est donc fonction de la fréquence d'horloge. Etant donné que la précision sur l'amplitude n'est pas la même en haute fréquence qu'en basse fréquence (la précision est meilleure en basse fréquence qu'en haute fréquence) on fait varier cette fréquence d'horloge avec la fréquence de la sinusoïde. La variation est telle que la fréquence d'horloge augmente à basse fréquence, pour améliorer la définition.

Dans la pratique les diverses données nécessaires pour commander le moteur sont selon des tables en mémoire du microcontrôleur ou microprocesseur. La table contient, pour chaque fréquence de sinusoïde, la valeur de la période T, le nombre de périodes T par paliers et les valeurs A, B et C pour les divers paliers d'amplitude.

Cependant les contraintes de prix limitent la capacité de la mémoire du microprocesseur, ses possibilités d'adressage et sa rapidité.

Si l'adressage n'est possible que sur un nombre limité de pas, par exemple 128, pour des fréquences de sinusoïdes s'étalant de 0 à 600 Hz il n'est à première vue possible de modifier la fréquence que de 5 Hz en 5 Hz. Mais pour les basses fréquences de la sinusoïde une variation aussi importante n'est pas admissible car elle pourrait faire décrocher le moteur asynchrone. C'est pourquoi on fait varier la fréquence par incréments de 1 Hz, mais les tables d'amplitude ne varient que de 5 pas en 5 pas, c'est-à-dire qu'on utilise le même motif d'amplitude (un motif est la représentation de X octets d'amplitude, chacun de ces octets représentant l'amplitude d'un palier) et cela pour 4 fréquences différentes dans une plage de l'ordre de 5 Hz. Si le motif d'amplitude est le même pour 4 fréquences différentes, l'amplitude du signal ne l'est pas. Elle évolue de façon à garder la relation V/f constante (V est la tension et f la fréquence), ce qui est une condition optimale de fonctionnement du moteur. Dans cette plage le nombre de paliers reste constant.

De façon plus précise chaque table en mémoire du microprocesseur est formée de la façon suivante :

Un premier octet (8 bits) représente par ses 4 bits (chiffres binaires) de poids fort, le nombre de pas se trouvant dans la table antérieure. Les 4 bits de poids faible représentent le nombre de pas dans la table courante.

On trouve ensuite un nombre X d'octets d'amplitude. Chacun de ces X octets représente l'amplitude d'un palier.

Un troisième type d'octet représente l'accélération du moteur et donc le nombre de répétitions de la table.

Un quatrième type d'octet représente le nombre de périodes T par paliers.

Enfin quatre autres octets représentent quatre valeurs successives de 4 périodes de hachage.

Les tables élémentaires sont chaînées grâce au premier octet qui indique le nombre d'octets de la table élémentaire précédente et le nombre d'octets de la table dont il fait partie. Cette disposition assure une succession correcte des commandes au moteur. L'organisation de la table indiquée ci-dessus permet aussi des accélérations et décélérations sans décrochage du moteur.

Ces dispositions de commande de la vitesse du moteur asynchrone sont utilisées en même temps qu'une commande classique de lave-linge pour faire varier la vitesse du moteur d'entraînement du tambour. A cet effet le microprocesseur est connecté au système de programmation du lave-linge; ce microprocesseur peut contenir tout ou partie des programmes de lavage.

La commande du moteur s'effectuera de préférence en boucle ouverte, c'est-à-dire sans génératrice tachymétrique. Cependant l'invention n'exclue pas un fonctionnement en boucle fermée.

L'invention s'applique aussi à la commande de moteurs ayant un nombre de phases différent de trois.

## Revendications

1. Dispositif de commande pour moteur électrique à stator bobiné engendrant un champ tournant, notamment un moteur asynchrone, comportant un générateur (20) pour découper à fréquence (1/T) et rapport cyclique variables (t₁/T) une tension continue (E), l'intensité du courant statorique étant à chaque période de découpage fonction de ce rapport cyclique (t₁/T) qui varie de façon sinusoïdale, chaque alternance de sinusoïde (30) étant formée de paliers d'amplitude (50), de durée constante (Tₑ), le générateur (20) comportant un microprocesseur et une mémoire, les valeurs d'amplitude des champs tournants engendrés pouvant être choisis dans toutes les gammes de fréquences, caractérisé en ce que sont inscrites dans la mémoire des tables successives contenant, pour une fréquence de sinusoïde (30), la valeur de la période (T) de découpage de la tension continue (E), le nombre de périodes (Tₑ) par paliers (50) et les valeurs (A, B, C) correspondant au rapport cyclique pour les divers paliers (50), chaque table étant formée au moins :
- d'un nombre d'emplacements mémoire pour les valeurs (A, B, C) correspondant aux rapports cycliques des paliers (50), l'amplitude étant définie par le rapport cyclique (t₁/T),
- d'un emplacement mémoire représentant le nombre de répétitions de la table,
- d'un emplacement mémoire représentant le nombre de périodes (T) de découpage par paliers,
- des emplacements mémoires représentant chacun des valeurs successives de périodes (T) de découpage, la même table étant utilisée pour les valeurs successives de ces périodes (T).

2. Dispositif selon la revendication 1, caractérisé en ce que la table est organisée de la façon suivante :
- un premier octet représentant par ses quatre bits de poids fort, le nombre de pas se trouvant dans la table antérieure, les quatre bits de poids faible représentant le nombre de pas dans la table, un pas représentant une variation donnée de la fréquence de la sinusoïde (30),
- un nombre d'octets pour les valeurs (A, B, C) correspondant aux rapports cycliques des paliers (50), l'amplitude étant définie par le rapport cyclique (t₁/T),
- un octet suivant représentant le nombre de répétitions de la table,
- un octet suivant représentant le nombre de périodes (T) de découpage par paliers,
- des octets suivants représentant chacun des valeurs successives de périodes (T) de découpage.

3. Dispositif selon l'une quelconque des revendications précédentes, caractérisé en ce que chaque alternance de sinusoïde est formée de paliers (50), de durée constante (Tₑ), le nombre de paliers multiple de deux et du nombre de phases est choisi de manière à optimiser la période (T) et le nombre de périodes (T) par paliers.

4. Dispositif selon la revendication 3, caractérisé en ce que le nombre de paliers par alternance est pair et multiple du nombre de phases.

5. Dispositif selon la revendication 4, caractérisé en ce que pour faire varier la fréquence de la sinusoïde, la modification n'intervient qu'à la fin d'un palier lors d'un passage par zéro de l'alternance, et on fait varier soit la fréquence de découpage, soit le nombre de paliers, soit le nombre d'alternances par paliers afin que l'alternance de la sinusoïde modifiée contienne, comme la sinusoïde de départ, un nombre entier pair de paliers, multiple du nombre de phases, et que la fréquence de découpage soit le plus proche de la fréquence centrale envisagée.

6. Dispositif selon l'une quelconque des revendications 3 à 5, caractérisé en ce que le nombre de paliers par alternance de sinusoïde est plus élevé aux basses fréquences qu'aux hautes fréquences.

7. Dispositif selon la revendication 6, caractérisé en ce qu'étant destiné à commander un moteur asynchrone polyphasé, le nombre de paliers par alternance est un multiple de 2 et du nombre de phases, et en ce que les fréquences de sinusoïde pouvant varier dans une gamme donnée, cette gamme est divisée en plages dans chacune desquelles le nombre de paliers reste constant.

8. Dispositif selon la revendication 7, caractérisé en ce que le nombre de paliers dépend de la fréquence selon le tableau ci-dessous :
| Plages de fréquences désirées de sinusoïde | Nombre de paliers |
|---|---|
| 0 Hz à 30 Hz | 36 |
| 30 Hz à 70 Hz | 30 |
| 70 Hz à 150 Hz | 24 |
| 150 Hz à 200 Hz | 18 |
| 200 Hz à 300 Hz | 12 |
| 300 Hz à 600 Hz | 6 |

9. Dispositif de commande selon la revendication 3, caractérisé en ce que les amplitudes des paliers ne pouvant prendre qu'un nombre fini de valeurs la précision sur les paliers est plus grande aux basses fréquences qu'aux hautes fréquences.

10. Dispositif de commande selon la revendication 5, caractérisé en ce que l'on fait varier la fréquence de la sinusoïde par pas, les amplitudes restant proportionnelles à la fréquence pour plusieurs fréquences consécutives pour que le rapport de la tension sur la fréquence soit constant.

11. Dispositif de commande selon la revendication 10, caractérisé en ce que les pas de variations de fréquences sont suffisamment faibles pour que la variation de vitesse soit sans à coups.

12. Dispositif selon l'une quelconque des revendications précédentes, caractérisé en ce que pour le découpage de la tension continue il comporte un compteur-diviseur (34) dont l'entrée (34₂) reçoit un signal d'horloge et dont la sortie de comptage est reliée à une première entrée d'un comparateur (33) dont la seconde entrée reçoit un signal représentant le niveau instantané (A) désiré pour la sinusoïde, la sortie du comparateur (33) commandant un interrupteur (15, 18) de découpage de la tension continue.

13. Dispositif selon l'une quelconque des revendications précédentes, caractérisé en ce que la commande est effectuée en boucle ouverte.

14. Dispositif selon l'une quelconque des revendications 1 à 12, caractérisé en ce que la commande est effectuée en boucle fermée.

15. Dispositif selon l'une quelconque des revendications précédentes, caractérisé en ce que le couple moteur à haute fréquence de sinusoïde est inférieur au couple moteur à basse fréquence de sinusoïde.

16. Dispositif selon l'une quelconque des revendications précédentes, caractérisé en ce que l'accélération est propre à une fréquence ou à un groupe de fréquences.

17. Application du dispositif selon l'une quelconque des revendications précédentes, à un appareil électroménager, tel qu'un lave-linge, à moteur électrique asynchrone d'entraînement d'un organe de cet appareil.

## Patentansprüche

1. Steueranordnung für einen elektrischen Motor mit einer Statorwicklung, welche ein Drehfeld erzeugt, insbesondere für einen Asynchronmotor, mit einem Generator (20) zum Zerhacken einer Gleichspannung (E) mit variabler Frequenz (1/T) und variablem Tastverhältnis (t₁/T), wobei die Intensität des Statorstromes in jeder Zerhack-Periode von diesem Tastverhältnis (t₁/T) abhängt, welches sich sinusförmig ändert, wobei jede Halbperiode der Sinuskurve (30) durch Amplitudenstufen (50) konstanter Dauer (Tₑ) gebildet ist, wobei der Generator (20) einen Mikroprozessor und einen Speicher enthält, wobei die Amplitudenwerte der erzeugten Drehfelder in allen Frequenzgebieten gewählt werden können, dadurch gekennzeichnet, daß in den Speicher aufeinanderfolgende Tabellen eingeschrieben sind, welche für eine Frequenz der Sinuskurve (30) den Wert der Periode (T) der Zerhackung der Gleichspannung (E), die Anzahl der Perioden (Tₑ) je Stufe (50) sowie die Werte (A, B, C) enthält, welche dem Tastverhältnis für die verschiedenen Stufen (50) entsprechen, wobei jede Tabelle gebildet ist durch wenigstens:
- eine Anzahl von Speicherstellen für die Werte (A, B, C), welche den Tastverhältnissen der Stufen (50) entsprechen, wobei die Amplitude durch das Tastverhältnis (t₁/T) definiert ist;
- eine Speicherstelle, welche die Anzahl von Wiederholungen der Tabelle angibt;
- eine Speicherstelle, welche die Anzahl von Zerhack-Perioden (T) je Stufe angibt;
- Speicherstellen, welche jeweils aufeinanderfolgende Werte von Zerhack-Perioden (T) angeben, wobei dieselbe Tabelle für die aufeinanderfolgenden Werte dieser Perioden (T) verwendet wird.

2. Anordnung nach Anspruch 1, dadurch gekennzeichnet, daß die Tabelle in der folgenden Weise geordnet ist:
- ein erstes Byte, welches durch seine vier werthohen Bits die Anzahl von Schritten angibt, welche sich in der vorherigen Tabelle befinden, wobei die vier wertniedrigen Bits die Anzahl von Schritten in der Tabelle angeben, wobei ein Schritt eine gegebene Änderung der Frequenz der Sinuskurve (30) darstellt,
- eine Anzahl von Bytes für die Werte (A, B, C), welche den Tastverhältnissen der Stufen (50) entsprechen, wobei die Amplitude durch das Tastverhältnis (t₁/T) definiert ist,
- ein nachfolgendes Byte, welches die Anzahl von Wiederholungen der Tabelle angibt,
- ein nachfolgendes Byte, welches die Anzahl von Zerhack-Perioden (T) je Stufe angibt,
- nachfolgende Bytes, welche jeweils aufeinanderfolgende Werte von Zerhack-Perioden (T) angeben.

3. Anordnung nach einem der vorhergehenden Ansprüche, dadurch gekennzeichnet, daß jede Sinuskurven-Halbperiode durch Stufen (50) konstanter Dauer (Tₑ) gebildet ist, wobei die Stufenzahl, die ein Vielfaches von zwei und der Phasenzahl ist, so gewählt ist, daß die Periode (T) und die Anzahl von Perioden (T) je Stufe optimiert sind.

4. Anordnung nach Anspruch 3, dadurch gekennzeichnet, daß die Stufenzahl je Halbperiode gerade und ein Vielfaches der Phasenzahl ist.

5. Anordnung nach Anspruch 4, dadurch gekennzeichnet, daß für eine Änderung der Frequenz der Sinuskurve die Modifikation nur am Ende einer Stufe bei einem Nulldurchgang der Halbperiode auftritt und daß entweder die Zerhack-Frequenz oder die Stufenzahl oder die Anzahl von Halbperioden je Stufe geändert wird, damit die Halbperiode der geänderten Sinuskurve in gleicher Weise wie die ursprüngliche Sinuskurve eine gerade ganze Stufenzahl enthält, welche ein Mehrfaches der Phasenzahl ist, und damit die Zerhack-Frequenz so nahe wie möglich an der beabsichtigten Mittelfrequenz liegt.

6. Anordnung nach einem der Ansprüche 3 bis 5, dadurch gekennzeichnet, daß die Stufenzahl je Sinuskurven-Halbperiode bei niedrigen Frequenzen größer als bei hohen Frequenzen ist.

7. Anordnung nach Anspruch 6, dadurch gekennzeichnet, daß dann, wenn sie für die Steuerung eines mehrphasigen Asynchronmotors vorgesehen ist, die Stufenzahl je Halbperiode ein Vielfaches von zwei und der Phasenzahl ist und daß die Sinuskurven-Frequenzen in einem gegebenen Gebiet variabel sind, wobei dieses Gebiet in Bereiche unterteilt ist, in denen jeweils die Stufenzahl konstant ist.

8. Anordnung nach Anspruch 7, dadurch gekennzeichnet, daß die Stufenzahl von der Frequenz gemäß der nachfolgenden Tabelle abhängt:
| Bereiche von gewünschten Frequenzen der Sinuskurve | Anzahl der Stufen |
|---|---|
| 0 Hz bis 30 Hz | 36 |
| 30 Hz bis 70 Hz | 30 |
| 70 Hz bis 150 Hz | 24 |
| 150 Hz bis 200 Hz | 18 |
| 200 Hz bis 300 Hz | 12 |
| 300 Hz bis 600 Hz | 6 |

9. Steueranordnung nach Anspruch 3, dadurch gekennzeichnet, daß dann, wenn die Amplituden der Stufen nur eine endliche Anzahl von Werten annehmen können, die Genauigkeit bezüglich der Stufen bei niedrigen Frequenzen größer als bei hohen Frequenzen ist.

10. Steueranordnung nach Anspruch 5, dadurch gekennzeichnet, daß die Frequenz der Sinuskurve schrittweise geändert wird, wobei die Amplituden für mehrere aufeinanderfolgende Frequenzen proportional zu der Frequenz bleiben, damit das Verhältnis der Spannung zu der Frequenz konstant bleibt.

11. Steueranordnung nach Anspruch 10, dadurch gekennzeichnet, daß die Schritte von Änderungen von Frequenzen ausreichend klein sind, damit die Geschwindigkeitsänderung ohne Sprünge erfolgt.

12. Anordnung nach einem der vorhergehenden Ansprüche, dadurch gekennzeichnet, daß sie für das Zerhacken der Gleichspannung einen Teilerzähler (34) enthält, dessen Eingang (34₂) ein Taktsignal empfängt und dessen Zählausgang mit einem ersten Eingang eines Vergleichers (33) verbunden ist, dessen zweiter Eingang ein Signal empfängt, welches den gewünschten Momentanwert (A) für die Sinuskurve angibt, wobei der Ausgang des Vergleichers (33) einen Schalter (15, 18) zum Zerhacken der Gleichspannung steuert.

13. Anordnung nach einem der vorhergehenden Ansprüche, dadurch gekennzeichnet, daß die Steuerung in einer offenen Schleife durchgeführt wird.

14. Anordnung nach einem der Ansprüche 1 bis 12, dadurch gekennzeichnet, daß die Steuerung in einer geschlossenen Schleife durchgeführt wird.

15. Anordnung nach einem der vorhergehenden Ansprüche, dadurch gekennzeichnet, daß das Motordrehmoment bei hoher Sinuskurvenfrequenz kleiner als das Motordrehmoment bei niedriger Sinuskurvenfrequenz ist.

16. Anordnung nach einem der vorhergehenden Ansprüche, dadurch gekennzeichnet, daß die Beschleunigung einer Frequenz oder einer Frequenzengruppe eigen ist.

17. Anwendung der Anordnung nach einem der vorhergehenden Ansprüche bei einem Elektro-Haushaltsgerät wie einer Waschmaschine mit einem elektrischen Asynchronmotor zum Antreiben eines Organs dieses Gerätes.

## Claims

1. Control device for an electric motor having a wound stator generating a rotating field, especially an induction motor, including a generator (20) for chopping a DC voltage (E) at a variable frequency (1/T) and variable duty cycle (t₁/T), the strength of the stator current at each chopping period being a function of this duty cycle (t₁/T) which varies sinusoidally, each half-period of a sinusoid (30) being formed by amplitude levels (50) of constant duration (Tₑ), the generator (20) including a microprocessor and a memory, it being possible for the amplitude values of the rotating fields generated to be chosen within all frequency ranges, characterized in that inscribed in the memory are successive tables containing, for a frequency of a sinusoid (30), the value of the period (T) of chopping of the DC voltage (E), the number of periods (Tₑ) per level (50) and the values (A, B, C) corresponding to the duty cycle for the various levels (50), each table being formed by at least:
- a number of memory locations for the values (A, B, C) corresponding to the duty cycles of the levels (50), the amplitude being defined by the duty cycle (t₁/T);
- a memory location representing the number of repetitions of the table;
- a memory location representing the number of chopping periods (T) per level; and
- memory locations representing each of the successive values of chopping periods (T), the same table being used for the successive values of these periods (T).

2. Device according to Claim 1, characterized in that the table is organized in the following manner:
- a first eight-bit byte representing by its four high-order bits the number of steps located in the previous table and the four low-order bits representing the number of steps in the table, a step representing a given variation in the frequency of the sinusoid (30);
- a number of eight-bit bytes for the values (A, B, C) corresponding to the duty cycles of the levels (50), the amplitude being defined by the duty cycle (t₁/T);
- a following eight-bit byte representing the number of repetitions of the table;
- a following eight-bit byte representing the number of chopping periods (T) per level; and
- following eight-bit bytes representing each of the successive chopping period (T) valves.

3. Device according to either of the preceding claims, characterized in that each half-period of a sinusoid is formed by levels (50) of constant duration (Tₑ), and the number of levels, this being a multiple of two and of the number of phases, is chosen so as to optimize the period (T) and the number of periods (T) per level.

4. Device according to Claim 3, characterized in that the number of levels per half-period is even and a multiple of the number of phases.

5. Device according to Claim 4, characterized in that, in order to vary the frequency of the sinusoid, the modification takes place only at the end of a level at a zero-crossing of the half-period, and either the chopping frequency or the number of levels or the number of periods per level is varied so that the half-period of the modified sinusoid contains, as does the original sinusoid, an even integer of levels, this being a multiple of the number of phases, and in that the chopping frequency is as close as possible to the envisaged central frequency.

6. Device according to any one of Claims 3 to 5, characterized in that the number of levels per half-period of a sinusoid is larger at low frequencies than at high frequencies.

7. Device according to Claim 6, characterized in that, being intended to control a polyphase induction motor, the number of levels per half-period is a multiple of 2 and of the number of phases, and in that, it being possible for the frequencies of a sinusoid to vary within a given range, this range is divided into subranges in each of which the number of levels remains constant.

8. Device according to Claim 7, characterized in that the number of levels depends on the frequency according to the table below:
| Desired frequency subranges of a sinusoid | Number of levels |
|---|---|
| 0 Hz to 30 Hz | 36 |
| 30 Hz to 70 Hz | 30 |
| 70 Hz to 150 Hz | 24 |
| 150 Hz to 200 Hz | 18 |
| 200 Hz to 300 Hz | 12 |
| 300 Hz to 600 Hz | 6 |

9. Control device according to Claim 3, characterized in that, the amplitudes of the levels only being able to take a finite number of values, the accuracy on the levels is greater at low frequencies than at high frequencies.

10. Control device according to Claim 5, characterized in that the frequency of the sinusoid is varied in steps, the amplitudes remaining proportional to the frequency for several consecutive frequencies so that the ratio of the voltage to the frequency is constant.

11. Control device according to Claim 10, characterized in that the frequency variation steps are sufficiently small so that the variation in speed is smooth.

12. Device according to any one of the preceding claims, characterized in that, for the chopping of the DC voltage, it includes a counter-divider (34), the input (34₂) of which receives a clock signal and the counting output of which is connected to a first input of a comparator (33), the second input of which receives a signal representing the desired instantaneous level (A) for the sinusoid, the output of the comparator (33) controlling a switch (15, 18) for chopping the DC voltage.

13. Device according to any one of the preceding claims, characterized in that the control is carried out in open-loop mode.

14. Device according to any one of Claims 1 to 12, characterized in that the control is carried out in closed-loop mode.

15. Device according to any one of the preceding claims, characterized in that the high-frequency-sinusoid driving torque is less than the low-frequency-sinusoid driving torque.

16. Device according to any one of the preceding claims, characterized in that the acceleration is specific to a frequency or to a group of frequencies.

17. Application of the device according to any one of the preceding claims to a domestic electrical appliance, such as a washing machine, having an electric induction motor for driving a component of such an appliance.
